# EUROPEAN PATENT APPLICATION

(11) **EP 4 823 099 A1**
(43) Date of publication of application: **14.10.2026**
(21) Application number: 24899518.5
(22) Date of filing: 28.10.2024
(51) Int. Cl.: H04N 21/431

(54) **LIVE-STREAMING OBJECT PROCESSING METHOD AND APPARATUS, AND DEVICE AND STORAGE MEDIUM**

(30) Priority: 04.12.2023 CN 202311651909
(71) Applicant: Beijing Youzhuju Network Technology Co., Ltd., Beijing 101299 (CN)
(72) Inventor: LUO, Wei, Beijing 100028 (CN); XU, Wanxu, Beijing 100028 (CN)
(74) Representative: Grünecker Patent- und Rechtsanwälte PartG mbB
(86) International application number: PCT/CN2024/127923
(87) International publication number: WO 2025/118875

(57) **Abstract**

The disclosure relates to a method, apparatus, device and storage medium for live streaming object processing. The method provided here includes: displaying first state information corresponding to a target live streaming object on a live stream interface page, where the target live streaming object is a live streaming object that is being explained, the target live streaming object is configured with a target activity object having predetermined activity time information, the predetermined activity time information is configured to divide the target activity object into multiple activity states, the first state information is configured to represent that the target activity object is in a first activity state of the multiple activity states, and the first state information includes countdown information corresponding to the first activity state; controlling the first state information to switch to presenting second state information, where the second state information is configured to represent that the target activity object is in a second activity state in the multiple activity states, and the second state information includes countdown information corresponding to the second activity state.

## Description

This application claims priority to Chinese Patent Application No. 202311651909.9, filed on December 04, 2023, and entitled "Method, Apparatus, Device and Storage Medium for Live Streaming Object Processing" the entire content of which is incorporated herein by reference.

### FIELD

The disclosure relates to the field of data processing, in particular to a method, an apparatus, a device and a storage medium for live streaming object processing.

### BACKGROUND

With the continuous development of live streaming technology, network live streaming becomes more and more popular, and demands of users for live streaming objects are increasingly diversified.

However, the current live streaming object processing mode is relatively simple, and cannot satisfy the ever-increasing and diverse demands of users.

### SUMMARY

In order to solve the above technical problem, an embodiment of the present disclosure provides a method for live streaming object processing.

According to a first aspect, the present disclosure provides a method for live streaming object processing, and the method includes: displaying first state information corresponding to a target live streaming object on a live stream interface page, wherein the target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state; and controlling the first state information to switch to presenting second state information, where the second state information is configured to represent that the target activity object is in a second activity state of the plurality of activity states, and the second state information includes countdown information corresponding to the second activity state.

In an alternative implementation, displaying the first state information corresponding to the target live streaming object on the live stream interface page includes: displaying an explanation card corresponding to the target live streaming object on the live stream interface page; and presenting the first state information on the explanation card.

In an alternative implementation, displaying first state information corresponding to the target live streaming object on the live stream interface page includes: displaying a first live streaming object list on the live stream interface page, where a live streaming object card of the target live streaming object is presented in the first live streaming object list; and presenting the first state information on the live streaming object card of the target live streaming object.

In an alternative implementation, a live streaming object card of a first live streaming object is further presented in the first live streaming object list, and the second activity state belongs to an ongoing activity state of the target activity object; where the countdown information corresponding to the second activity state is presented in a predetermined first display style on the live streaming object card of the first live streaming object; and the countdown information corresponding to the second activity state is presented in a predetermined second display style on the live streaming object card of the target live streaming object.

In an alternative implementation, the first activity state belongs to a pre-activity state of the target activity object, and the countdown information corresponding to the first activity state is configured to count down to a start of the target activity object; the second activity state belongs to an ongoing activity state of the target activity object, and the countdown information corresponding to the second activity state is configured to count down to the end of the target activity object.

In an alternative implementation, the first activity state and the second activity state respectively belong to two activity stages of an ongoing activity state of the target activity object, and display styles of countdown information respectively corresponding to the first activity state and the second activity state are different.

In an alternative implementation, the first state information further includes virtual resource value information, and the displaying the first state information corresponding to the target live streaming object on the live stream interface page includes: switching the virtual resource value information displayed on the live stream interface page from an initial virtual resource value to a predetermined virtual resource value corresponding to the target activity object.

In an alternative implementation, before displaying the first state information corresponding to the target live streaming object on the live stream interface page, the method further includes: displaying a prompt card of the target activity object configured by the target live streaming object on the live stream interface page, where the prompt card is configured to prompt time information of the target activity object.

In an alternative implementation, before displaying the first state information corresponding to the target live streaming object on the live stream interface page, the method further includes: determining, in response to a predetermined explanation operation triggered for the target live streaming object, the target live streaming object as a live streaming object that is being explained.

In an alternative implementation, before determining, in response to the predetermined explanation operation triggered for the target live streaming object, the target live streaming object as the live streaming object that is being explained, the method further includes: displaying a second live streaming object list on the live stream interface page, where a live streaming object card of the target live streaming object is presented in a predetermined prompt form in the second live streaming object list, where the predetermined prompt form is configured to prompt a trigger of the predetermined explanation operation for the target live streaming object.

According to a second aspect, the present disclosure further provides an apparatus for live streaming object processing. The apparatus includes: a first display module configured to display first state information corresponding to a target live streaming object on a live stream interface page, where the target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state; and a control module configured to control the first state information to switch to presenting second state information, where the second state information is configured to represent that the target activity object is in a second activity state of the plurality of activity states, and the second state information includes countdown information corresponding to the second activity state.

According to a third aspect, the present disclosure provides a computer-readable storage medium having instructions stored thereon. The instructions, when run on a terminal device, causes the terminal device to implement the above method.

According to a fourth aspect, the present disclosure provides a device for live streaming object processing, including: a memory, a processor, and a computer program stored on the memory and executable on the processor. The computer program, when executed by the processor, implements the above method.

According to a fifth aspect, the present disclosure provides a computer program product. The computer program product includes a computer program/instruction that, when executed by a processor, implements the above method.

### BRIEF DESCRIPTION OF DRAWINGS

The accompanying drawings which are incorporated in and constitute a part of the specification, illustrate embodiments consistent with the present disclosure and serve to explain the principles of the present disclosure together with the specification.

In order to more clearly illustrate the technical solutions in the embodiments of the present disclosure or in the prior art, the accompanying drawings required for the description of the embodiments or the prior art will be briefly described below, and it is obvious to those skilled in the art that other drawings may be obtained from these drawings without creative efforts.
FIG. 1 is a flowchart of a method for live streaming object processing provided by an embodiment of the present disclosure;
FIG. 2 is a schematic diagram of a live stream interface page provided by an embodiment of the present disclosure;
FIG. 3 is a schematic diagram of another live stream interface page provided by an embodiment of the present disclosure;
FIG. 4 is a schematic diagram of a further live stream interface page provided by an embodiment of the present disclosure;
FIG. 5 is a schematic diagram of another further live stream interface page provided by an embodiment of the present disclosure;
FIG. 6 is a schematic diagram of a still further live stream interface page provided by an embodiment of the present disclosure;
FIG. 7 is a schematic diagram of a yet further live stream interface page provided by an embodiment of the present disclosure;
FIG. 8 is a schematic diagram of an activity setting page provided by an embodiment of the present disclosure;
FIG. 9 is a schematic diagram of a live stream interface page provided by an embodiment of the present disclosure;
FIG. 10 is a flowchart of a further method for live streaming object processing provided by an embodiment of the present disclosure;
FIG. 11 is a schematic structural diagram of an apparatus for live streaming object processing provided by an embodiment of the present disclosure;
FIG. 12 is a schematic structural diagram of a device for live streaming object processing provided by an embodiment of the present disclosure.

### DETAILED DESCRIPTION

In order to more clearly understand the above objects, features and advantages of the present disclosure, the solutions of the present disclosure will be further described below. It should be noted that embodiments of the present disclosure and features in the embodiments may be combined with each other without conflict.

Many specific details are set forth in the following description to facilitate a thorough understanding of the present disclosure, but the present disclosure may also be implemented in other ways other than those described herein. It is apparent that the embodiments in the specification are only some of the embodiments of the present disclosure, but not all of the embodiments.

With the continuous development of live streaming technology, network live streaming becomes more and more popular, and demands of users for live streaming objects are increasingly diversified.

However, the current live streaming object processing mode is relatively simple, and cannot satisfy the ever-increasing and diverse demands of users.

How to further enrich a live streaming object processing method and satisfy user requirements so as to improve the user experience has become an urgent technical problem to be solved.

Therefore, an embodiment of the present disclosure provides a method for live streaming object processing. Specifically, first state information corresponding to a target live streaming object is displayed on a live stream interface page. The target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state. The first state information is controlled to switch to presenting second state information. The second state information is configured to represent that the target activity object is in a second activity state of the plurality of activity states, and the second state information includes countdown information corresponding to the second activity state. Thus, according to the embodiment of the disclosure, the live streaming object processing mode is enriched and the user experience is improved by displaying the target live streaming object configured with the target activity object having the predetermined activity time information on the live stream interface page and controlling state information of the target activity object to be switched and displayed when an activity state of the target activity object changes.

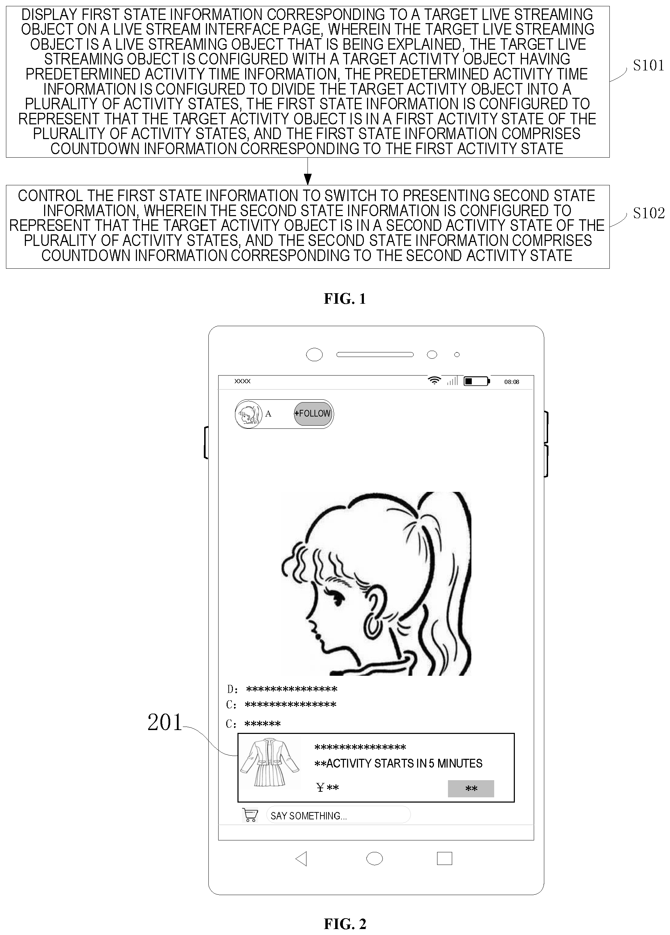

Specifically, an embodiment of the present disclosure provides a method for live streaming object processing. Referring to FIG. 1, FIG. 1 is a flowchart of a method for live streaming object processing provided by an embodiment of the present disclosure. The method specifically includes the following steps.

At S101, first state information corresponding to a target live streaming object is displayed on a live stream interface page.

The target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state.

The method for live streaming object processing provided in the embodiment of the present disclosure may be applied to a client of a live streamer side, and may also be applied to a client of a viewer side. For example, the client may include a client deployed in a smart phone, a client deployed in a tablet computer, and the like.

In an embodiment of the present disclosure, the live streaming object may be a live streaming product, a local life service, or the like presented on a live stream interface page. The target live streaming object may be any live streaming product or a local live service that is being explained in the live stream interface.

The target live streaming object is configured with a target activity object, the target activity object may be understood as a time-limited activity, the target activity object has predetermined activity time information, that is, the target activity object is relevant to time. Specifically, the start and the end of the target activity object may be performed according to a predetermined activity time.

In an embodiment of the present disclosure, the predetermined activity time information may divide the target activity object into a plurality of activity states. The plurality of activity states may correspond to a plurality of different state information. The plurality of activity states may include a pre-activity state, an ongoing activity state, and a post-activity state.

The first state information is configured to represent that the target activity object is in a first activity state of a plurality of activity states. The first activity state corresponds to first state information including countdown information that the target activity state is in the first activity state, and the first activity state may be any of the plurality of activity states.

At S102, the first state information is controlled to switch to presenting the second state information.

The second state information is configured to represent that the target activity object is in a second activity state of the plurality of activity states, and the second state information includes countdown information corresponding to the second activity state.

The second state information is configured to represent that the target activity object is in a second activity state of the plurality of activity states, the second state information may be countdown information corresponding to the second activity state, and the second activity state may be a next activity state after the first activity state ends.

In an embodiment of the present disclosure, when the first activity state ends to enter the next activity state, that is, when the second activity state is entered from the first activity state, the first state information is controlled to switch to presenting the second state information.

In the method for live streaming object processing provided by an embodiment of the disclosure, first, first state information corresponding to a target live streaming object is displayed on a live stream interface page. The target live streaming object is a live streaming object that is being explained. The target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state. The first state information is controlled to be switched to presenting second state information. The second state information is configured to represent that the target activity object is in a second activity state of the plurality of activity states, and the second state information includes countdown information corresponding to the second activity state.

Thus, in the embodiments of the disclosure, the target live streaming object configured with the target activity object having the predetermined activity time information is displayed on the live stream interface page, and when the activity state of the target activity object changes, the state information of the target activity object is controlled to be switched and presented, thereby enriching the mode processing of the live streaming object and improving the user experience.

In an alternative implementation, displaying the first state information corresponding to the target live streaming object on the live stream interface page may include displaying an explanation card corresponding to the target live streaming object on the live stream interface page, and presenting the first state information on the explanation card.

The target live streaming object is being explained in the live streaming, the target live streaming object is configured with the target activity object, the explanation card may not only present explanation information of the target live streaming object, but also may present the first state information of the target activity object, and may specifically include the countdown information corresponding to the first activity state.

The explanation information may include related information of the target live streaming object, and may be specifically an icon of the target live streaming object, etc.

FIG. 2 is a schematic diagram of a live stream interface page provided by an embodiment of the present disclosure. An explanation card 201 corresponding to the target live streaming object is displayed on the live stream interface page, and the first state information in the target activity object, and the related information of the target live streaming object including icons of the target live streaming object, and the like are presented on the explanation card.

In an embodiment of the disclosure, the first state information is presented on the explanation card of the target live streaming object. The first state information may include countdown information corresponding to the first activity state, and the first activity state may belong to a pre-activity state of the target activity object. For example, the first state information "** activity starts in 5 minutes" is displayed on the live stream interface page of FIG. 2 as described above.

The countdown information corresponding to the first activity state included by the first state information is configured to count down to a start of the target activity object, that is, the first state information is configured to preview the target activity object, specifically presenting in advance to inform a user that the target activity object is about to start in a countdown presentation form.

When the first activity state is the pre-activity state of the target activity object, and the ongoing activity state is entered from the pre-activity state, that is, when the second activity state is entered from the first activity state, the first state information is controlled to switch to presenting the second state information. The second state information is configured to represent that the target activity object is in the second activity state, i.e., the ongoing activity state, and the second state information includes countdown information corresponding to the second activity state, that is, the countdown information in the activity state.

Specifically, the second state information includes countdown information corresponding to the second activity state, and the countdown information corresponding to the second activity state is configured to count down to the end of the target activity object. That is, according to an activity duration of the target activity object, the activity duration of the target activity object is counted down. When the countdown information corresponding to the second activity state starts, it is indicated that the target activity object starts, and when the countdown information corresponding to the second activity state ends, it is indicated that the target activity object ends.

For example, it is assumed that the target activity object is a live streaming time-limited flash sale activity, when the target live streaming object that is being explained belongs to a product in the live streaming time-limited flash sale activity, an explanation card of the target live streaming object is displayed on the live stream interface page, and the countdown information before the start of the live streaming time-limited flash sale activity is displayed on the explanation card. When the live streaming flash sale activity starts, the pre-activity state is switched to the ongoing active state, that is, the first state information is controlled to switched to display the second state information.

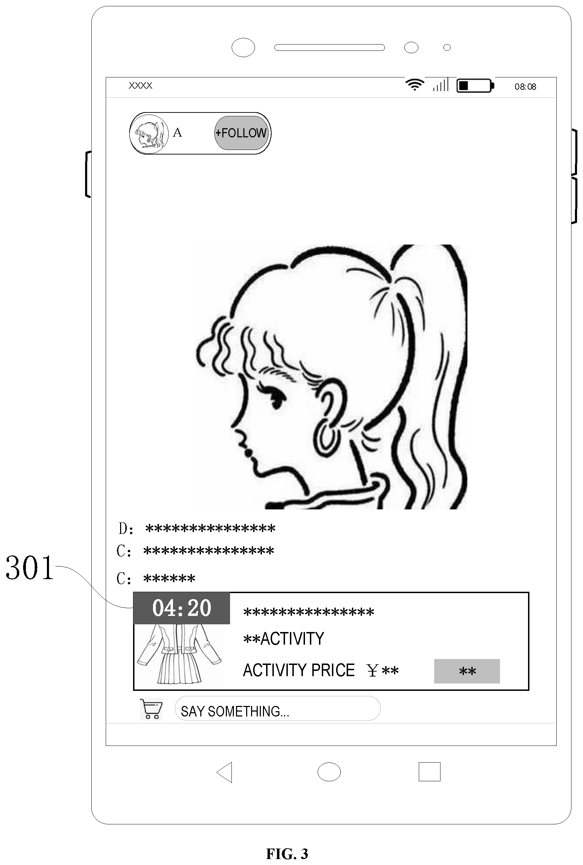

FIG. 3 is a schematic diagram of another live stream interface page provided by an embodiment of the present disclosure. The explanation card of the target live streaming object is displayed on the live stream interface page. The second state information 301 is displayed on the explanation card. The second state information is countdown information corresponding to the second activity state, i.e., countdown information that the target activity object is in the ongoing activity state, that is, the first state information switch in the live stream interface page of FIG. 2 is controlled to be switched to display the second state information.

In an embodiment of the disclosure, the first state information is presented on the explanation card of the target live streaming object. The first state information may include countdown information corresponding to the first activity state, and the first activity state may also belong to the ongoing activity state of the target activity object.

As shown in the live stream interface page in FIG. 3, the explanation card of the target live streaming object is displayed on the live stream interface page. The explanation card presents the first state information of the target activity object, and target live streaming object related information including an icon of the target live streaming object and the like. The first state information is countdown information indicating that the target activity object is in the activity.

When the next activity state is entered from the first activity state, that is, the second activity state is entered from the first activity state, the second activity state may also belong to an ongoing activity state of the target activity object. Specifically, the first activity state is a stage that the target activity object just starts an activity, the second activity state is a stage before the target activity object ends an activity, that is, the first activity state represents that the target activity object is just started, and the second activity state represents that the target activity object is about to end.

For example, it is assumed that the target activity object is a live streaming time-limited flash sale activity, when the target live streaming object that is being explained belongs to a product in the live streaming time-limited flash sale activity, the countdown information indicating that the live streaming time-limited flash sale activity is just started is displayed on the explanation card of the target live streaming object. According to the countdown information, before the live streaming flash sale activity is about to end, the first state information switch is controlled to be switched to display the second state information. In this case, the countdown information before the end of the activity of the live streaming time-limited flash sale activity is displayed on the explanation card.

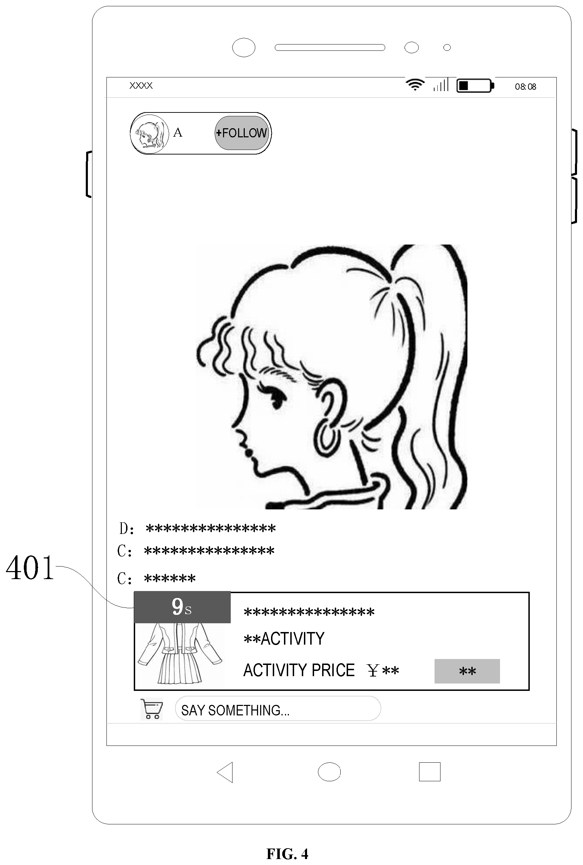

FIG. 4 is a schematic diagram of a further live stream interface page provided by an embodiment of the present disclosure. An explanation card of the target live streaming object is displayed on the live stream interface page. Second state information 401 is presented on the explanation card. The second state information is countdown information corresponding to the second activity state. The second activity state is a state that the target activity object is about to end, that is, the first state information display displayed on the live stream interface page of FIG. 3 is controlled to be switched to display the second state information displayed on the live stream interface page of FIG. 4.

In a practical application, when both the first activity state and the second activity state belong to an ongoing activity state of the target activity object, that is, respectively belong to two different activity stages of the ongoing activity state, an activity stage of the target activity object is presented to the user. In an embodiment of the present disclosure, corresponding display styles are respectively set for the first activity state and the second activity state. Specifically, display styles of the countdown information respectively corresponding to the first activity state and the second activity state are different.

The first state information displayed on the explanation card in the live stream interface page in FIG. 3 is a countdown display style corresponding to the first activity state. The second state information displayed on the explanation card in the live stream interface page in FIG. 4 is a countdown display style corresponding to the second activity state.

In a practical application, in the process of displaying the first state information corresponding to the target live streaming object on the live stream interface page, that is, when a state that the target live streaming object just starts is displayed, in order to further present a difference between activity states of the target activity object, in an embodiment of the present disclosure, the first state information displayed on the live stream interface page further includes virtual resource value information. Specifically, the virtual resource value information displayed on the live stream interface page is switched from an initial virtual resource value to a predetermined virtual resource value corresponding to the target activity object.

When the target activity object included by the target live streaming object is in a pre-activity state, the initial virtual resource value may be a value of the target live streaming object; and when the target activity object included by the target live streaming object in the ongoing activity state, the predetermined virtual resource value may be the value of the target live streaming object.

As shown in the live stream interface page in FIG. 3, an explanation card of the target live streaming object is displayed on the live stream interface page. The first state information is presented on the explanation card, and the first state information includes the initial virtual resource value of the target live streaming object being switched to a predetermined virtual resource value corresponding to the target activity object. When the target activity object is switched to the ongoing activity state from a state that the activity is just started, that is, in the process of controlling the first state information to be switched to display the second state information, the second state information displayed on the explanation card is the predetermined virtual resource value of the target activity object, for example, the second state information displayed on the live stream interface page shown in FIG. 4.

On the basis that the first state information is displayed on the explanation card on the live stream interface page, an embodiment of the present disclosure may also present the first state information on the first live streaming object list displayed on the live stream interface page.

Specifically, in response to a display trigger operation for the first live streaming object list on the live stream interface page, the first live streaming object list is displayed on the live stream interface page. A live streaming object card of the target live streaming object is presented in the first live streaming object list, and the live streaming object card presents the live streaming object card of the target live streaming object to the user. The live streaming object card may specifically be a live streaming product card that presents information of a live streaming product.

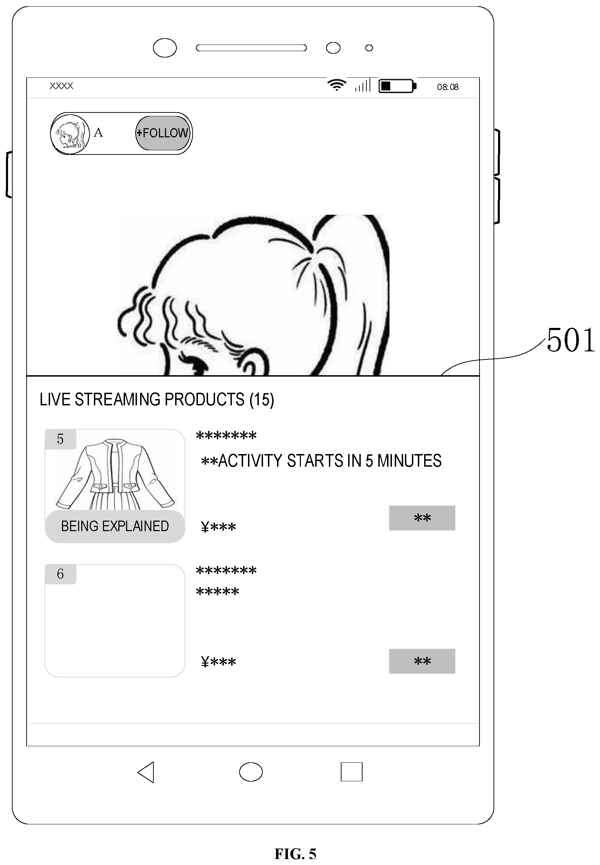

FIG. 5 is a schematic diagram of another further live stream interface page provided by an embodiment of the present disclosure. A first live streaming object list 501 is displayed on the live stream interface page, a live streaming object card of the target live streaming object is presented in the first live streaming object list, and first state information of the target live streaming object is presented on the live streaming object card.

In an alternative implementation, the first state information is presented on the live streaming object card of the target live streaming object, and may be countdown information indicating a state before an activity of the target live streaming object starts, that is, the first activity state is a pre-activity state of the target activity object, to initiate countdown of the target activity object. As shown in the live stream interface page in FIG. 5, the first state information "** activity starts in 5 minutes" is displayed on the live streaming object card on the first live streaming object list.

When the first activity state is a pre-activity state of the target activity object, the first state information is controlled to switch to presenting second state information when the ongoing activity state is entered from the pre-activity state, that is, the second activity state is entered from the first activity state. The second state information is configured to represent the second activity state indicating that the target activity object is in the ongoing activity state, and the second state information includes countdown information corresponding to the second activity state, that is, the countdown information in the activity state.

Specifically, the second state information includes countdown information corresponding to the second activity state, and the countdown information corresponding to the second activity state is configured to count down to the end of the target activity object. That is, according to an activity duration of the target activity object, the activity duration of the target activity object is counted down. When the countdown information corresponding to the second activity state starts, it is indicated that the target activity object starts, and when the countdown information corresponding to the second activity state ends, it is indicated that the target activity object ends.

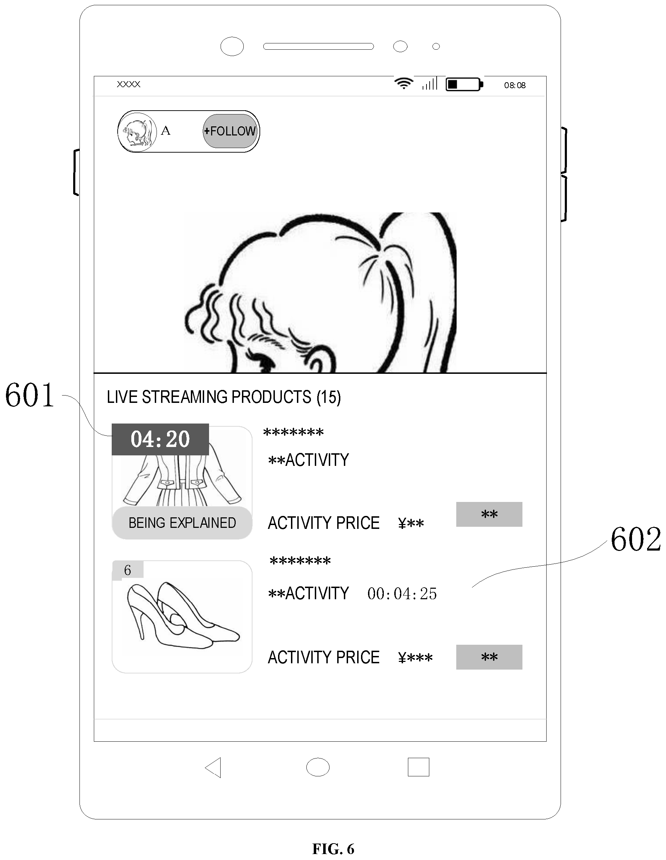

FIG. 6 is a schematic diagram of a still further live stream interface page provided by an embodiment of the present disclosure. A first live streaming object list is displayed on the live stream interface page. A live streaming object card of the target live streaming object is presented in the first live streaming object list. Second state information 601 is presented on the live streaming object card, and the second state information includes countdown information corresponding to a second activity state. The second activity state is a state that the target activity object in an activity, that is, the first state information on the live streaming object card of the target live streaming object in the live stream interface page of FIG. 5 is controlled to be switched to display the second state information.

In an embodiment of the disclosure, the first state information is presented on the live streaming object card on the first live streaming object list displayed on the live stream interface page. The first state information includes countdown information corresponding to the first activity state, and the first activity state may also be a state in which the target activity object is in an ongoing activity state. As shown in the live stream interface page in FIG. 6, the first state information is displayed on the live stream interface page, and the first state information is the countdown information for the target activity object being in the ongoing activity state.

When the next activity state is entered from the first activity state, that is, the second activity state is entered from the first activity state, the second activity state may also be the ongoing activity state of the target activity object. Specifically, the first activity state corresponds to a stage that the target activity object just starts an activity, and the second activity state corresponds to a stage before the target activity object ends an activity. That is, the first activity state represents that the target activity object is just started, and the second activity state represents that the target activity object is about to end.

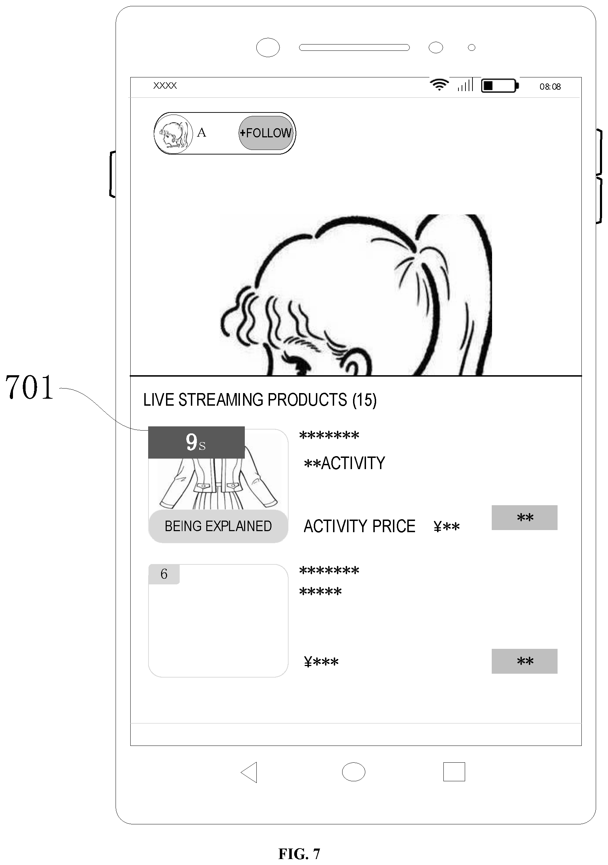

FIG. 7 is a schematic diagram of a yet further live stream interface page provided by an embodiment of the present disclosure. A first live streaming object list is displayed on the live stream interface page. A live streaming object card corresponding to the target live streaming object is displayed on the live streaming object list. Second state information 701 is presented on the live streaming object card. The second state information is countdown information corresponding to the second activity state, and the second activity state is a state that the target activity object is about to end, that is, the first state information displayed on the live stream interface page of FIG. 6 is controlled to be switched to display the second state information displayed on the live stream interface page of FIG. 7.

In a practical application, when both the first activity state and the second activity state belong to the ongoing activity state of the target activity object and respectively belong to two different activity stages of the ongoing activity state, to present an activity stage of the target activity object to the user. In an embodiment of the present disclosure, corresponding display styles are respectively set for the first activity state and the second activity state. Specifically, the display styles of the countdown information respectively corresponding to the first activity state and the second activity state are different.

For example, the first state information displayed by the live streaming object card on the first live streaming list displayed on the live stream interface page in FIG. 6 is a countdown display style corresponding to the first activity state. For example, the second state information displayed by the live streaming object card on the first live streaming list displayed on the live stream interface page in FIG. 7 is a countdown display style corresponding to the second activity state.

In a practical application, in the process of displaying the first state information corresponding to the target live streaming object on the live stream interface page, that is, when a state that the target live streaming object just starts is displayed, to further present the difference between the activity states of the target activity object, in an embodiment of the present disclosure, the first state information displayed on the live stream interface page further includes virtual resource value information. Specifically, the virtual resource value information displayed on the live stream interface page is switched from an initial virtual resource value to a predetermined virtual resource value corresponding to the target activity object.

When the target activity object included by the target live streaming object is in a pre-activity state, the initial virtual resource value may be the value of the target live streaming object; and when the target activity object included by the target live streaming object is in the ongoing activity state, the predetermined virtual resource value may be the value of the target live streaming object.

As shown in the live stream interface page in FIG. 6, a first live streaming object list is displayed on the live stream interface page, the first state information is presented on a live streaming object card displayed in the first live streaming object list, where the first state information includes the initial virtual resource value of the target live streaming object being switched to a predetermined virtual resource value corresponding to the target live streaming object. When the target activity object is switched to the ongoing activity state from the state that the activity is just started, that is, in the process of controlling the first state information to be switched to display the second state information, the second state information displayed on the live streaming object card is the predetermined virtual resource value of the target activity object, for example, the second state information displayed on the live stream interface page shown in FIG. 7.

In a practical application, in the process of presenting the live streaming object card of the target live streaming object in the first live streaming object list, the live streaming object card of the first live streaming object may also be presented in the first live streaming object list, where the first live streaming object is any live streaming product in the current live stream interface other than the target live streaming object, and the first live streaming object is configured with a target activity object having predetermined activity information, that is, the first live streaming object is in a non-explanation state.

The target activity object for the first live streaming object may be the same as or different from the target activity object of the target live streaming object.

In an alternative implementation, the live streaming object card of the target live streaming object having the target activity object and the live streaming object card of the first live streaming object are presented in the first live streaming object list displayed on the live stream interface page. The target activity object of the target live streaming object is in an ongoing activity state, and the target activity object of the first live streaming object is in an ongoing activity state.

FIG. 6 is a schematic diagram of a still live stream interface page provided by an embodiment of the present disclosure. A first live streaming object list is displayed on the live stream interface page, and the live streaming object card of the target live streaming object and the live streaming object card of the first live streaming object are displayed on the first live streaming object list.

In a practical application, in order to present the state information of the target activity object in the same activity state on the live streaming object list, the state information of the target activity object in the same activity state is presented on the first live streaming object list in different display styles for the target live streaming object and the first live streaming object in the embodiment of the present disclosure.

Specifically, the countdown information corresponding to the second activity state is presented on the live streaming object card of the first live streaming object displayed on the first live streaming object list in a predetermined first display style, and the countdown information corresponding to the second activity state is presented on the live streaming object card of the target live streaming object displayed on the first live streaming object list in a predetermined second display style. The predetermined first display style is different from the predetermined second display style.

As shown in the live stream interface page in FIG. 6, as shown in 601, the countdown information corresponding to the second activity state is presented on the live streaming object card of the target live streaming object on the first live streaming object list on the live stream interface page in the predetermined second display style, and as shown in 602, the countdown information corresponding to the second activity state is presented on the live streaming object card of the first live streaming object in the predetermined first display style. The target live streaming object is being explained, and the first live streaming object is in non-explanation.

According to an embodiment of the disclosure, the target live streaming object and the first live streaming object in the second activity state are presented by setting different predetermined display styles, thereby enriching the processing mode of the live streaming object, and further improving the user experience.

Based on the above embodiment, in order to preview the target activity object to the user, a prompt card of the target activity object may be displayed on the live stream interface page before the first state information corresponding to the target live streaming object is displayed on the live stream interface page.

Specifically, the prompt card of the target activity object configured by the target live streaming object is displayed on the live stream interface page. The prompt card is configured to prompt time information of the target activity object, that is, to reveal a start time of the target activity object in advance to the user.

In an alternative implementation, taking a scenario applied to a live streamer terminal as an example, displaying the prompt card of the target activity object configured by the target live streaming object on the live stream interface page may include: triggering a configuration operation for the prompt card of the target activity object on an activity setting page, and after the target activity setting is completed, displaying the prompt card of the target activity object configured by the target live streaming object on the live stream interface page.

In an embodiment of the present disclosure, the target live streaming object needs to be configured with the target activity object before displaying the prompt card of the target live streaming object on the live stream interface page. The target activity object has predetermined activity time information.

The target activity object is configured for the target live streaming object, and specifically, the target live streaming object is configured for the target live streaming object on the activity setting page. The target activity object may include an activity duration, an activity price of the target live streaming object in the activity, whether the prompt card is configured, and an activity mode, where the activity mode includes a mode of directly starting an activity and a mode of setting a start time of an activity.

In an alternative implementation, taking applying to the live streamer terminal as an example, configuring the target activity object for the target live streaming object may include: first, triggering an activity setting entry, displaying a second live streaming object list, presenting the live streaming object and a corresponding setting control in the second live streaming object list. When a trigger operation for the setting control is received, an activity setting page is displayed. An activity price, an activity duration, an activity mode, and whether to configure a prompt card are displayed on the activity setting page.

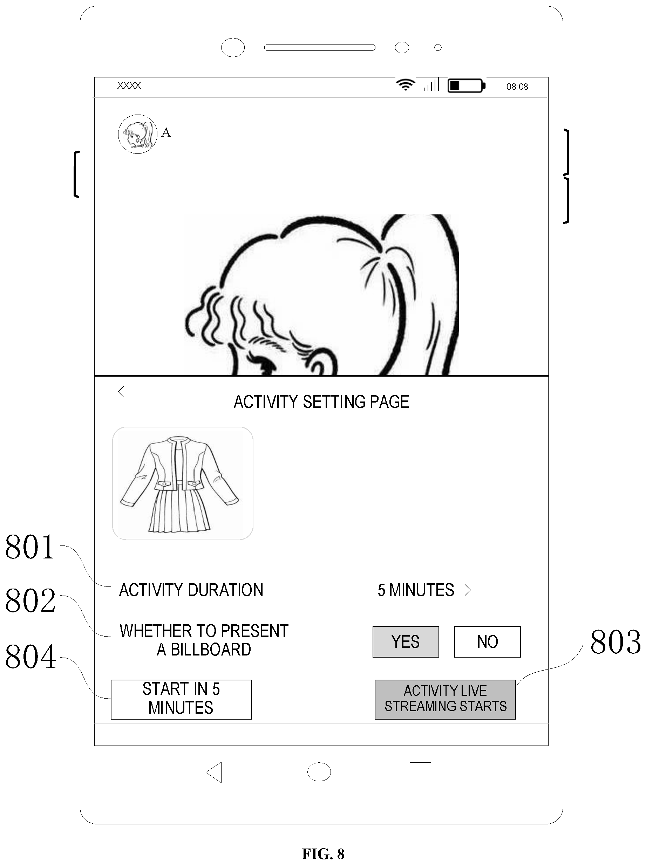

FIG. 8 is a schematic diagram of an activity setting page provided by an embodiment of the present disclosure. An activity duration 801, whether to configure a prompt card 802, and an activity mode are displayed on the activity setting page. The activity mode includes a mode of directly starting an activity and a mode of setting a start time of an activity. For example, 803 is a control corresponding to the mode of directly starting an activity, and 804 is a control corresponding to the mode of setting a start time of an activity.

In an embodiment of the disclosure, before the first state information corresponding to the target live streaming object is displayed on the live stream interface page, a predetermined explanation operation needs to be triggered for the target live streaming object. Specifically, when applied in the live streamer terminal, and when the predetermined explanation operation triggered for the target live streaming object is received, the target live streaming object is determined as the live streaming object that is being explained.

In an alternative implementation, triggering the predetermined explanation operation for the target live streaming object may include: displaying a live streaming activity object page. A target live streaming object and an explanation control corresponding to the live streaming object are displayed on the live streaming activity object page. The target live streaming object is configured with a target activity object, and when a trigger operation for the explanation control of the target live streaming object is received, the target live streaming object is determined as a live streaming object that is being explained.

In order to further prompt to trigger the predetermined explanation operation for the target live streaming object, in an embodiment of the present disclosure, before the predetermined explanation operation for the target live streaming object is triggered to determine the target live streaming object as the live streaming object that is being explained, the live streaming object card of the target live streaming object may be presented on the live stream interface page in a predetermined prompt form.

Specifically, when applied to the live streamer terminal, a second live streaming object list is displayed on the live stream interface page. The live streaming object card of the target live streaming object is presented in the second live streaming object list in a predetermined prompt form. The predetermined prompt form is configured to prompt to trigger the predetermined explanation operation for the target live streaming object.

In an alternative implementation, presenting the live streaming object card of the target live streaming object in the second live streaming object list in the predetermined prompt form may include presenting the live streaming object card of the target live streaming object in a manner of being pinned to top in the second live streaming object list.

In another alternative implementation, presenting the live streaming object card of the target live streaming object in the predetermined prompt form in the second live streaming object list may include presenting the live streaming object card of the target live streaming object in a manner of a prompt pop-up in the second live streaming object list.

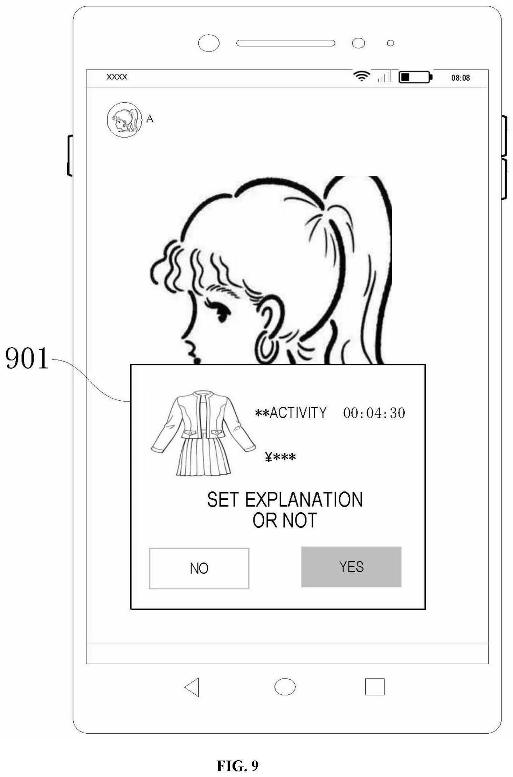

FIG. 9 is a schematic diagram of another live stream interface page provided by an embodiment of the present disclosure. A second live streaming object list is displayed on the live stream interface page, and a live streaming object card of a target live streaming object is presented in the second live streaming object list. The live streaming object card of the target live streaming object is displayed in the second live streamer object list in a manner of a prompt pop-up 901.

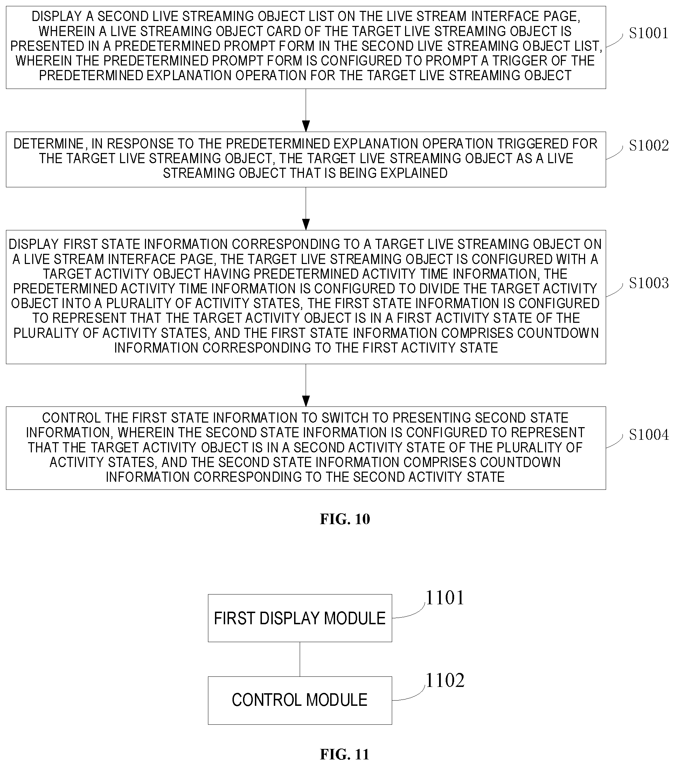

For ease of understanding the above embodiments, as shown in FIG. 10, which is a flowchart of a further method for live streaming object processing provided by an embodiment of the present disclosure, the method is specifically applied to a live streamer terminal. Specifically, the method includes: S1001: displaying a second live streaming object list on the live stream interface page, where a live streaming object card of the target live streaming object is presented in a predetermined prompt form in the second live streaming object list, where the predetermined prompt form is configured to prompt a trigger of a predetermined explanation operation for the target live streaming object; S1002: determining, in response to the predetermined explanation operation triggered for the target live streaming object, the target live streaming object as a live streaming object that is being explained; S1003: displaying first state information corresponding to the target live streaming object on a live stream interface page, where the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state; S1004: controlling the first state information to switch to presenting second state information, where the second state information is configured to represent that the target activity object is in a second activity state of the plurality of activity states, and the second state information includes countdown information corresponding to the second activity state.

Based on the above method embodiments, the present disclosure further provides an apparatus for live streaming object processing. Referring to FIG. 11, which is a schematic structural diagram of an apparatus for live streaming object processing provided by an embodiment of the present disclosure, the apparatus includes: a first display module 1101 configured to display first state information corresponding to a target live streaming object on a live stream interface page, where the target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state; and a control module 1102 configured to control the first state information to switch to presenting second state information, where the second state information is configured to represent that the target activity object is in a second activity state of the plurality of activity states, and the second state information includes countdown information corresponding to the second activity state.

In an alternative implementation, the first display module includes: a first display submodule configured to display an explanation card corresponding to the target live streaming object on the live stream interface page; and a first presentation submodule configured to present the first state information on the explanation card.

In an alternative implementation, the first display module includes: a second display submodule configured to display a first live streaming object list on the live stream interface page, where a live streaming object card of the target live streaming object is presented in the first live streaming object list; and a second presentation submodule configured to present the first state information on the live streaming object card of the target live streaming object.

In an alternative implementation, a live streaming object card of a first live streaming object is further presented in the first live streaming object list, and the second activity state belongs to an ongoing activity state of the target activity object; where the countdown information corresponding to the second activity state is presented in a predetermined first display style on the live streaming object card of the first live streaming object; and the countdown information corresponding to the second activity state is presented in a predetermined second display style on the live streaming object card of the target live streaming object.

In an alternative implementation, the first activity state belongs to a pre-activity state of the target activity object, and the countdown information corresponding to the first activity state is configured to count down to a start of the target activity object; the second activity state belongs to an ongoing activity state of the target activity object, and the countdown information corresponding to the second activity state is configured to count down to the end of the target activity object.

In an alternative implementation, the first activity state and the second activity state respectively belong to two activity stages of an ongoing activity state of the target activity object, and display styles of countdown information respectively corresponding to the first activity state and the second activity state are different.

In an alternative implementation, the first state information further includes virtual resource value information, and the first display module is specifically configured to: switch the virtual resource value information displayed on the live stream interface page from an initial virtual resource value to a predetermined virtual resource value corresponding to the target activity object.

In an alternative implementation, the apparatus further includes: a second display module configured to display a prompt card of the target activity object configured by the target live streaming object on the live stream interface page, where the prompt card is configured to prompt time information of the target activity object.

In an alternative implementation, the apparatus is applied to a live streamer terminal, and the apparatus further includes: a determining module configured to determine, in response to a predetermined explanation operation triggered for the target live streaming object, the target live streaming object as a live streaming object that is being explained.

In an alternative implementation, the apparatus further includes: a third display module configured to display a second live streaming object list on the live stream interface page, where a live streaming object card of the target live streaming object is presented in a predetermined prompt form in the second live streaming object list, where the predetermined prompt form is configured to prompt a trigger of the predetermined explanation operation for the target live streaming object.

In the apparatus for live streaming object processing provided by the embodiments of the present disclosure, specifically, first state information corresponding to a target live streaming object is displayed on a live stream interface page, where the target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information includes countdown information corresponding to the first activity state, the first state information is controlled to switch to presenting second state information, the second state information is configured to represent that the target activity object is in a second activity state of the plurality of activity states, and the second state information includes countdown information corresponding to the second activity state.

Thus, in the embodiments of the present disclosure, the target live streaming object configured with the target activity object having the predetermined activity time information is displayed on the live stream interface page, and when the activity state of the target activity object changes, the state information of the target activity object is controlled to be switched and presented, thereby enriching the processing mode of the live streaming object, and improving the user experience.

In addition to the above method and apparatus, an embodiment of the present disclosure further provides a computer-readable storage medium having instructions stored thereon. The instructions, when run on a terminal device, causes the terminal device to implement the method for live streaming object processing described in the embodiments of the present disclosure.

An embodiment of the present disclosure further provides a computer program product. The computer program product includes a computer program/instruction that, when executed by a processor, implements the method for live streaming object processing according to the embodiments of the present disclosure.

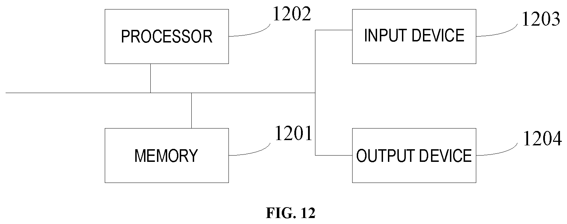

In addition, an embodiment of the present disclosure further provides a device for live streaming object processing, as shown in FIG. 12. The device may include:

a processor 1201, a memory 1202, an input device 1203, and the output device 1204. There may be one or more processors 1201 in the device for live streaming object processing, and one processor is used as an example in FIG. 12. In some embodiments of the present disclosure, the processor 1201, the memory 1202, the input device 1203, and the output device 1204 may be connected by a bus or other ways, and an example in which the processor 1201, the memory 1202, the input device 1203, and the output device 1204 are connected by a bus is shown in FIG. 12.

The memory 1202 may be configured to store a software program and a module, and the processor 1201 executes various functional applications and data processing of the device for live streaming object processing by running the software program and the module stored in the memory 1202. The memory 1202 may mainly include a storage program area and a storage data area. The storage program area may store an operating system, an application program required by at least one function, and the like. In addition, the memory 1202 may include a high-speed random access memory, or may include a non-volatile memory, for example, at least one magnetic disk storage device, a flash memory device, or another volatile solid-state storage device. The input device 1203 may be configured to receive input numeric or character information, and generate signal input related to user settings and function control of the device for live streaming object processing.

Specifically, in this embodiment, the processor 1201 may load an executable file corresponding to a progress of one or more application programs into the memory 1202 according to the following instructions, and the application program stored in the memory 1202 is run by the processor 1201, thereby implementing various functions of the above device for live streaming object processing.

It should be noted that relational terms such as "first" and "second" herein are merely used to distinguish one entity or operation from another entity or operation without necessarily requiring or implying that any such actual relationship or sequence exists between these entities or operations. Moreover, the terms "include", "comprise" or any other variation thereof are intended to cover a non-exclusive inclusion, such that a process, method, article, or device including a series of elements includes not only those elements, but also other elements that are not expressly listed, or elements inherent to such a process, method, article, or device. Without more restriction, the elements defined by the statement "include a" do not exclude the presence of additional identical elements in the process, method, article, or device that includes the elements.

The above descriptions are only specific embodiments of the present disclosure, so that those skilled in the art can understand or implement the present disclosure. Various modifications to these embodiments will be apparent to those skilled in the art, the general principles defined herein may be implemented in other embodiments without departing from the spirit or scope of the present disclosure. Accordingly, the present disclosure will not be limited to these embodiments described herein, but is to be in conformity with the widest scope consistent with the principles and novel features disclosed herein.

## Claims

1. A method for live streaming object processing, comprising:
displaying first state information corresponding to a target live streaming object on a live stream interface page, wherein the target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information comprises countdown information corresponding to the first activity state;
controlling the first state information to switch to presenting second state information, wherein the second state information is configured to represent that the target activity object is in a second activity state of the plurality of activity states, and the second state information comprises countdown information corresponding to the second activity state.

2. The method of claim 1, wherein displaying the first state information corresponding to the target live streaming object on the live stream interface page comprises:
displaying an explanation card corresponding to the target live streaming object on the live stream interface page;
presenting the first state information on the explanation card.

3. The method of claim 1, wherein displaying the first state information corresponding to the target live streaming object on the live stream interface page comprises:
displaying a first live streaming object list on the live stream interface page, wherein a live streaming object card of the target live streaming object is presented in the first live streaming object list;
presenting the first state information on the live streaming object card of the target live streaming object.

4. The method of claim 3, wherein a live streaming object card of a first live streaming object is further presented in the first live streaming object list, and the second activity state belongs to an ongoing activity state of the target activity object;
wherein the countdown information corresponding to the second activity state is presented in a predetermined first display style on the live streaming object card of the first live streaming object; and the countdown information corresponding to the second activity state is presented in a predetermined second display style on the live streaming object card of the target live streaming object.

5. The method of claim 1, wherein the first activity state belongs to a pre-activity state of the target activity object, and the countdown information corresponding to the first activity state is configured to count down to a start of the target activity object; the second activity state belongs to an ongoing activity state of the target activity object, and the countdown information corresponding to the second activity state is configured to count down to the end of the target activity object.

6. The method of claim 1, wherein the first activity state and the second activity state respectively belong to two activity stages of an ongoing activity state of the target activity object, and display styles of countdown information respectively corresponding to the first activity state and the second activity state are different.

7. The method of claim 6, wherein the first state information further comprises virtual resource value information, and the displaying the first state information corresponding to the target live streaming object on the live stream interface page comprises:
switching the virtual resource value information displayed on the live stream interface page from an initial virtual resource value to a predetermined virtual resource value corresponding to the target activity object.

8. The method of claim 1, wherein before displaying the first state information corresponding to the target live streaming object on the live stream interface page, the method further comprises:
displaying a prompt card of the target activity object configured by the target live streaming object on the live stream interface page, wherein the prompt card is configured to prompt time information of the target activity object.

9. The method of claim 1, wherein the method is applied to a live streamer terminal, and before displaying the first state information corresponding to the target live streaming object on the live stream interface page, the method further comprises:
determining, in response to a predetermined explanation operation triggered for the target live streaming object, the target live streaming object as a live streaming object that is being explained.

10. The method of claim 9, wherein before determining, in response to the predetermined explanation operation triggered for the target live streaming object, the target live streaming object as the live streaming object that is being explained, the method further comprises:
displaying a second live streaming object list on the live stream interface page, wherein a live streaming object card of the target live streaming object is presented in a predetermined prompt form in the second live streaming object list, wherein the predetermined prompt form is configured to prompt a trigger of the predetermined explanation operation for the target live streaming object.

11. An apparatus for live streaming object processing, comprising:
a first display module configured to display first state information corresponding to a target live streaming object on a live stream interface page, wherein the target live streaming object is a live streaming object that is being explained, the target live streaming object is configured with a target activity object having predetermined activity time information, the predetermined activity time information is configured to divide the target activity object into a plurality of activity states, the first state information is configured to represent that the target activity object is in a first activity state of the plurality of activity states, and the first state information comprises countdown information corresponding to the first activity state;
a control module configured to control the first state information to switch to presenting second state information, wherein the second state information is configured to represent that the target activity object is in a second activity state of the plurality of activity states, and the second state information comprises countdown information corresponding to the second activity state.

12. A computer-readable storage medium having instructions stored thereon, the instructions, when run on a terminal device, causing the terminal device to implement the method of any of claims 1 to 10.

13. A device for live streaming object processing, comprising: a memory, a processor, and a computer program stored on the memory and executable on the processor, the computer program, when executed by the processor, implementing the method of any of claims 1 to 10.
